# FASCICULE DE BREVET EUROPEEN

(11) **EP 3 411 209 B1**
(45) Date de publication et mention de la délivrance du brevet: **04.12.2019**
(21) Numéro de dépôt: 17702138.3
(22) Date de dépôt: 02.02.2017
(51) Int. Cl.: B29C 33/30, B29C 45/26, F02M 55/00, F02M 55/02

(54) **CONNECTEUR DE CIRCUIT DE RETOUR DE FUITE**
STECKER FÜR EINE HYDRAULISCHE RÜCKFLUSSLEITUNG
CONNECTOR OF A HYDRAULIC BACK FLOW CIRCUIT

(30) Priorité: 05.02.2016 FR 1650958
(43) Date de publication de la demande: 12.12.2018
(73) Titulaire: Delphi Technologies IP Limited, Saint Michael (BB)
(72) Inventeur: FROUIN, Thierry, 41350 Vineuil (FR); AMAND, Alain, 41000 Blois (FR)
(74) Mandataire: Delphi France SAS
(86) Numéro de dépôt international: PCT/EP2017/052288
(87) Numéro de publication internationale: WO 2017/134180

(56) Documents cités:
- EP-A2- 1 394 402
- WO-A1-2005/061940
- DE-A1-102013 008 302
- US-A1- 2010 244 302
- US-A1- 2010 244 434

## Description

### DOMAINE TECHNIQUE

La présente invention concerne un circuit de retour de fuite d'injecteur de carburant à basse pression et plus particulièrement la fabrication des connecteurs du circuit.

### ARRIERE-PLAN TECHNOLOGIQUE DE L'INVENTION

La présente invention concerne plus particulièrement un connecteur d'injecteur de carburant, par exemple le diesel, destiné à raccorder l'injecteur au circuit hydraulique de retour de fuite d'injecteur à basse pression agencé dans un véhicule automobile et prévue pour récupérer le carburant provenant de l'injecteur et le stocker dans le réservoir à carburant.

Le circuit hydraulique de retour fuite comprend à la fois des éléments de tuyaux et des connecteurs d'injecteur. Le circuit est connecté à tous les injecteurs du système d'injection et il s'étend en ligne le long des cylindres du moteur. Il comprend un premier connecteur en L pour l'injecteur situé à une extrémité du bloc moteur puis, des connecteurs en T pour les injecteurs suivants, des éléments de tuyaux courts reliant les connecteurs entre eux. Ainsi un moteur à quatre cylindres en ligne comprend un connecteur en L, trois connecteurs en T et trois éléments de tuyaux courts. Un dernier élément de tuyau plus long que les autres relie le dernier connecteur en T au réservoir de carburant.

L'évolution des systèmes d'injection et la réduction de la consommation dans le véhicule ont fait augmenter les pressions d'injection qui peuvent atteindre les 2500 bars et des températures atteignant 150°C avec des pics à 160-170°C. Les circuits hydrauliques de retour de fuite doivent résister à ces températures et à une pression positive de l'ordre de 6 bars ce qui nécessite des matériaux couteux pour les éléments tuyaux. De plus les connecteurs comprennent un élément raccord, en L ou en T, verrouillé dans une cage tubulaire par un capuchon verrou. Les éléments raccords en T comprennent des bras qui font des angles entre eux. Les connecteurs en T sont différents entre eux car les angles entre les bras peuvent être différents sur un même circuit hydraulique afin de faciliter sa mise en place sur le moteur. Les trois pièces du connecteur en T ou en L sont en plastique moulés. Les éléments raccords en L nécessitent un moule différent des éléments raccords en T. De plus la flexibilité de production imposée par les innombrables variantes d'architectures des moteurs (forme, nombre de cylindres) est couteuse et techniquement difficile.

L'objet de la présente invention est de résoudre ces inconvénients en proposant une solution économique et flexible dans la réalisation des connecteurs en T et en L.

### RESUME DE L'INVENTION

La présente invention vise à remédier aux inconvénients mentionnés précédemment en proposant une méthode de moulage d'un connecteur hydraulique réalisé en plastique moulé. Le connecteur est exclusivement prévu pour être agencé dans un circuit hydraulique de retour de carburant diesel d'un équipement d'injection direct pour moteur à combustion interne. De plus le connecteur peut être en forme de T ou en forme de L. Le connecteur comprend de plus :
- un élément raccord ayant un corps globalement cylindrique d'axe de corps et, un bras s'étendant selon un axe de bras perpendiculaire à l'axe de corps pour le connecteur en forme de L ou, deux bras s'étendant selon deux axes de bras distincts perpendiculaire à l'axe de corps pour le connecteur en forme de T, le corps étant apte à être connecté à un injecteur de carburant et, chaque bras étant apte à être connecté à l'extrémité d'un élément tuyau et,
- une cage cylindrique tubulaire s'étendant selon l'axe de corps, la cage étant pourvue de deux échancrures latérales, le corps étant agencé dans la cage, chaque échancrure permettant de laisser s'étendre un bras et,
- un capuchon verrou complémentairement encliqueté à une extrémité de la cage tubulaire de sorte à emprisonner l'élément raccord dans la cage. De plusla méthode de moulage comprend les étapes suivantes :
   a) pourvoir un moule ayant une empreinte d'élément raccord en T, ladite empreinte comprenant une empreinte de corps et deux empreintes de bras;
   b) agencer un insert dans l'empreinte d'un des deux bras lorsque il est prévu de mouler un élément raccord en L.

De plus le moule est un moule multi-empreintes dont toutes les empreintes sont identiques chacune comprenant une empreinte de corps et deux empreintes de bras. De plus les empreintes de bras font un angle entre elles, de sorte que les bras de l'élément raccord fassent ledit angle entre eux, ledit angle s'inscrivant dans un plan perpendiculaire à l'axe du corps. De plus ledit angle est compris entre 120° et 180°, de préférence d'environ 150°.

De plus la méthode de réalisation du circuit hydraulique de retour est exclusivement prévu pour un équipement d'injection direct de carburant diesel pour moteur à combustion interne. De plus le circuit s'étend entre un premier connecteur en L et un dernier connecteur en T, et comprend une pluralité de connecteurs intermédiaires en T ainsi qu'une pluralité d'élément de tuyau. De plus les bras de tous les connecteurs sont globalement alignés selon une direction principale et, un élément tuyau est agencé entre deux connecteurs voisins. De plus la méthode est caractérisée en ce que tous les connecteurs sont réalisés selon les modes de réalisations précédents. De plus tous les connecteurs sont agencés de sorte que les axes des bras fassent un angle globalement constant avec la direction principale, ledit angle étant globalement égal à 90° - B/2.

De plus le connecteur en T agencé à l'extrémité du circuit est tourné autour de l'axe de corps d'un angle globalement égal à l'angle inter-bras par rapport aux autres connecteurs en T du circuit hydraulique. De plus les éléments tuyaux ont des longueurs identiques. De plus le circuit hydraulique comprend le connecteur en T décrit précédemment et agencé à l'extrémité du circuit et comprenant les connecteurs réalisés par la méthode de moulage décrite précédemment.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est un schéma du système d'injection de carburant;
- la figure 2 est une vue de dessus du circuit hydraulique;
- la figure 3 est une vue du capuchon;
- la figure 4 est une vue de l'élément raccord en T ;
- la figure 5 est une vue de la cage;
- la figure 6 est une vue du connecteur en T assemblé
- la figure 7 est une vue de l'élément raccord en L;
- la figure 8 est une vue du connecteur en L assemblé.

### DESCRIPTION DES MODES DE REALISATION PREFERES

L'invention est maintenant décrite en référence aux figures et dans un but de clarté et de concision de la description l'orientation des figures sera utilisé sans aucune intention limitative quant à l'étendue de la protection, notamment au regard des différentes installations d'un injecteur dans un véhicule. Des mots tels que « haut, bas, en dessous, en dessus, vertical, monter, descendre ... » seront utilisés sans intention limitative et s'appliqueront de manière spécifique pour chaque figure. Dans la suite de la description, des éléments identiques ou similaires seront désignés par les mêmes références.

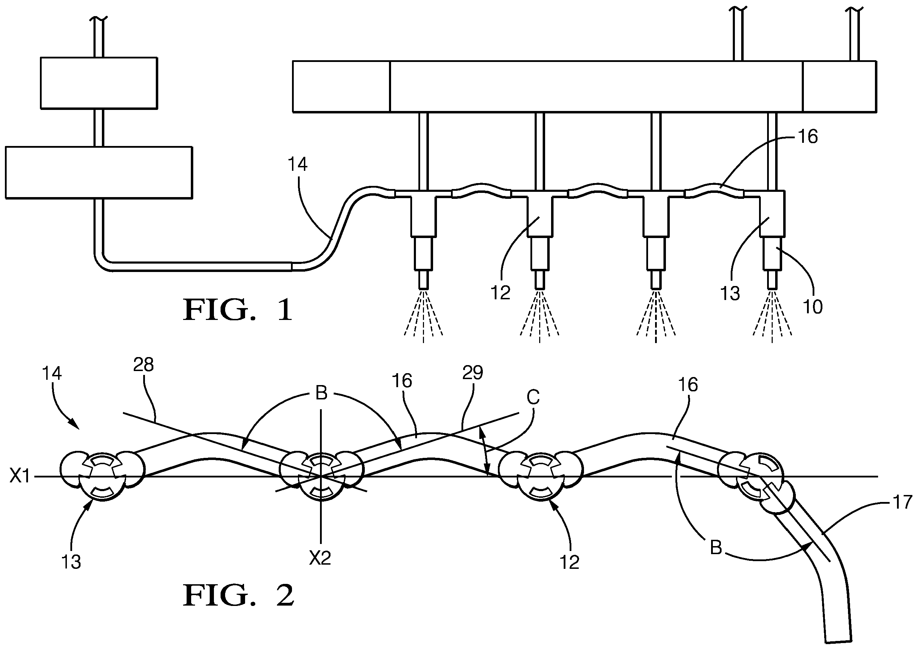

Selon la figure 1, dans un moteur à combustion interne, un circuit hydraulique de retour 14 de fuite est un circuit à basse pression reliant les injecteurs de carburant 10 à un réservoir de carburant. Le circuit hydraulique de retour de fuite 14 est connecté à tous les injecteurs de carburant 10 et s'étend en ligne le long des cylindres du bloc moteur (non représenté). Le carburant sous haute pression est acheminé aux injecteurs de carburant 10 puis le carburant est pulvérisé dans la chambre de combustion et une partie du carburant retourne dans le réservoir de carburant par le circuit hydraulique de retour de fuite 14

Selon la figure 2, le circuit hydraulique 14 comprend un premier connecteur en L 13 pour l'injecteur situé à une extrémité du bloc moteur puis, des connecteurs en T 12 pour les injecteurs suivants, des éléments tuyaux 16 courts reliant les connecteurs entre eux. En référence à la figure 2, le circuit hydraulique 14 est connecté à un moteur à quatre cylindres en ligne (non représenté) comprenant un connecteur en L 13 à gauche, trois connecteurs en T 12 et trois éléments de tuyaux 16 courts. Un dernier élément tuyau 17 plus long que les autres relie le dernier connecteur en T 12 à droite au réservoir de carburant (non représenté). En référence à la figure 2, deux axes X1, X2 sont orthogonales entre eux et représentent le plan de la figure 2.

Les éléments tuyaux 16 sont en matériaux plastiques ou en matériau élastomère qui donne de la souplesse pour l'assemblage du circuit hydraulique 14 et son montage sur le moteur. La disposition du circuit hydraulique 14 de retour de fuite est conçue pour minimiser les longueurs des éléments tuyaux 16 et le nombre de connecteurs différents en T 12, en L 13 en les reliant entre eux le long d'une direction générale X1. Selon la figure 2, le circuit hydraulique 14 est en ligne selon la direction générale X1. Selon d'autres alternatives, le circuit hydraulique peut être aussi en arbre c'est-à-dire que les connecteurs sont en L 13 et sont reliés au circuit par des éléments tuyaux 16.

Selon la figure 2 qui est une vue du dessus du circuit hydraulique 14 de retour de fuite, les quatre cylindres du moteur (non représenté) sont en dessous du circuit hydraulique 14. Le circuit est agencé de manière à avoir le centre des quatre connecteurs alignés dans la direction générale X1 allant de droite à gauche du circuit 14 de retour de fuite. Le connecteur en T 12 à droite et à une extrémité du circuit 14 permet de tourner l'élément tuyau 17 de manière à ce que l'élément tuyau 17 puisse tourner vers le haut ou vers le bas le long de l'axe X2 dans l'espace laissé par le moteur. Dans l'exemple présenté, le connecteur en T 12 disposé à l'extrémité est tourné d'environ 150 degrés par rapport aux autres connecteurs en T 12, et en L 13 alignés le long de la direction générale X1.

Les connecteurs en T 12 comprennent des bras 28, 29, qui font un angle B entre eux dans le plan (X1, X2). Cette architecture du circuit hydraulique 14 donne ainsi de la flexibilité dans l'agencement des connecteurs et des éléments tuyaux en fonction du type de motorisation. Il suffit alors de mettre autant de connecteurs que d'injecteurs le long d'une direction générale X1.

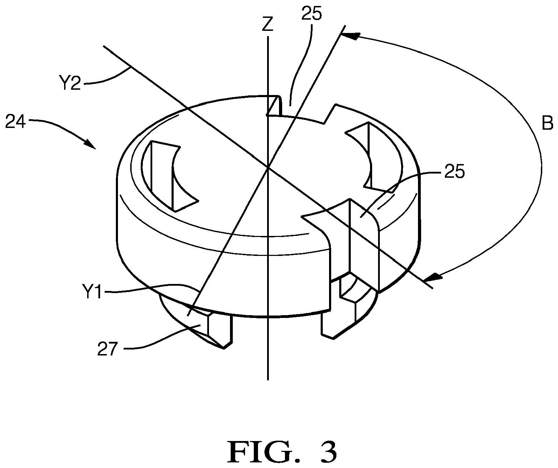

Selon les figures 3, 4, 5, et 6, le connecteur hydraulique en T 12 du circuit hydraulique 14 de retour de fuite comprend une cage tubulaire 20, un élément raccord 22 en T et un capuchon verrou 24.

De même selon les figures 3,5, 7 et 8, le connecteur hydraulique en L 13 du circuit hydraulique 14 de retour de fuite comprend la cage tubulaire 20, un élément raccord 23 en L et le capuchon verrou 24. La cage tubulaire 20 et le capuchon verrou 24 sont communs à tous les connecteurs en T 12, et en L 13 du circuit 14 de retour de fuite.

Selon la figure 3, le capuchon verrou 24 comprend deux rainures 25 droites faisant entre elles l'angle B de 150 degrés mais pouvant dans d'autres alternatives prendre n'importe quelle valeur par exemple entre 120 degrés et 180 degrés. De plus le capuchon 24 comprend deux clips 27 s'étendant vers le bas le long d'un axe vertical Z.

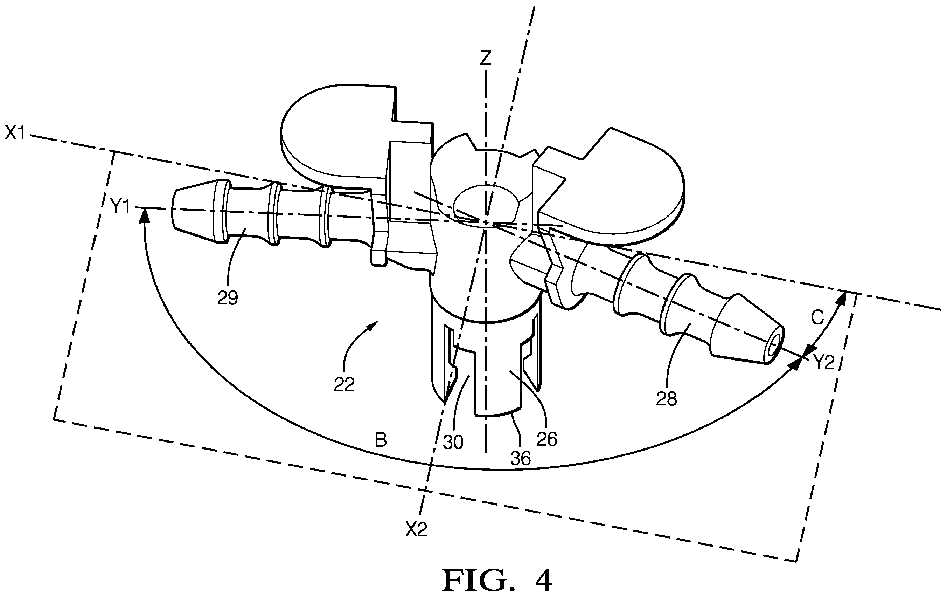

Selon la figure 4, les deux bras (28, 29) de l'élément raccord en T 22 s'étendent selon deux axes de bras distincts (Y1, Y2) perpendiculaire à un axe de corps (Z) pour le connecteur en forme de T 12. L'élément raccord en T 22 comprend un corps 26 allongé avec quatre échancrures 30 débouchantes à une extrémité 36 s'étendant le long de l'axe Z et deux bras 28, 29 perpendiculaires au corps 26 s'étendant le long de l'axe Y. Le corps 26 est connecté à l'injecteur de carburant 10 par l'extrémité 36 et comprend un canal interne pour la circulation du carburant vers le circuit hydraulique 14. Les deux axes des bras (Y1, Y2) font un angle globalement constant (C) avec la direction principale (X1), ledit angle (C) étant globalement égal à 90° - B/2.

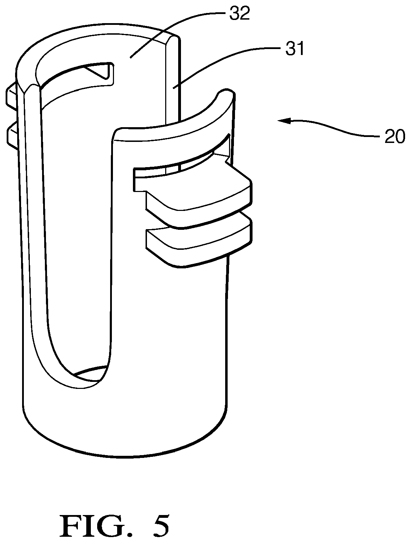

Selon la figure 5, la cage tubulaire 20 comprend une paroi cylindrique et le long de la paroi deux échancrures 31 latérales et débouchantes uniquement à une extrémité 32 de sorte à obtenir une élasticité de la paroi cylindrique de la cage 20 lors de l'insertion de l'élément raccord 22.

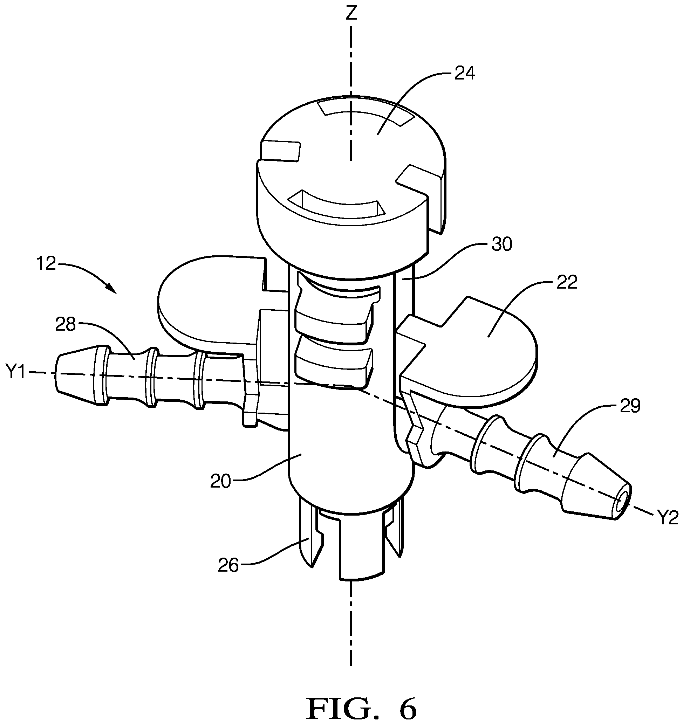

Selon la figure 6, les bras 28, 29 comprennent des cannelures et ils ont une forme d'ogive à leurs extrémités. Les bras 28 comprennent un canal interne pour la circulation du carburant vers les éléments tuyaux 16. Le corps 26 est apte à être connecté à un injecteur de carburant (non représenté) et chaque bras 28 est apte à être connecté à l'extrémité d'un élément tuyau 16. Le corps 26 est agencé dans la cage 20, chaque bras 28 s'étendant au travers d'une échancrure 30.

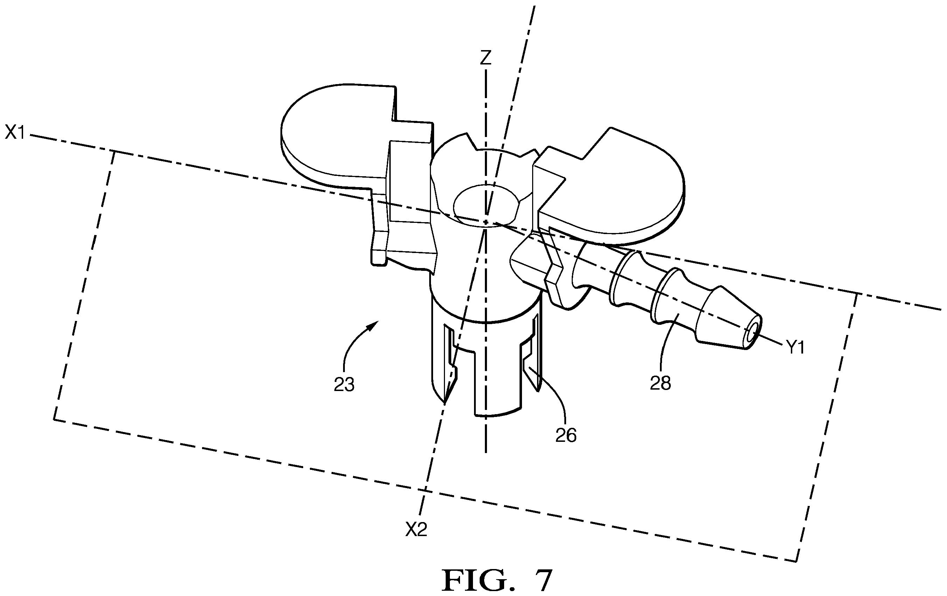

En référence à la figure 7, l'élément raccord 23 comprend un corps 26 s'étendant le long de l'axe longitudinal Z et un seul bras 28 perpendiculaire au corps 26 et s'étendant le long de l'axe Y1

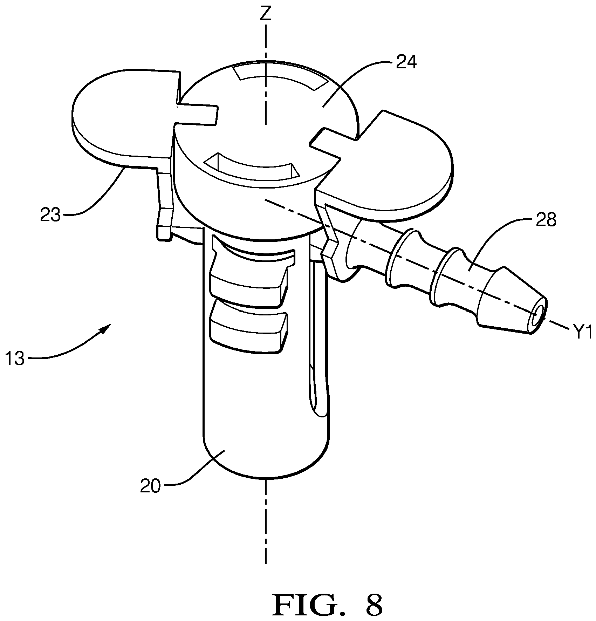

En référence à la figure 8, le connecteur 13 en L est identique au connecteur en T 12 à l'exception de l'élément raccord 23 ne comprenant qu'un seul bras 28. Ainsi le connecteur en L 13 diffère du connecteur en T 12 par l'élément raccord en L 23 qui n'a qu'un bras 28 alors que l'élément raccord en T 22 du connecteur en T 12 comprend deux bras 28, 29.

Dans un mode de réalisation préférée, la fabrication et l'assemblage du connecteur en T 12 et en L 13 vont être décrits dans le détail:
Tout d'abord les connecteurs en T 12 et en L 13 sont réalisés en plastique moulé. L'élément raccord 22,23, la cage tubulaire 20 et le capuchon verrou 24 sont en matière plastique. Ils sont réalisés par un procédé d'injection plastique décrit suivant les étapes suivantes :
- pourvoir un moule prévu pour mouler les éléments raccord en T 22, et en L 23, le moule ayant une empreinte d'élément raccord 22, ladite empreinte comprenant une empreinte de corps 26 et deux empreintes de bras 28.
- pourvoir un moule prévu pour mouler la cage tubulaire 20 et un moule pour le capuchon verrou 24.
- agencer un insert dans l'empreinte d'un bras 28 lorsqu'il est prévu de mouler un élément raccord 23 en L.
- injecter de la matière plastique dans chacun des moules mentionnés ci-dessus pour réaliser les éléments des connecteurs en T 12, en L 13 de circuit hydraulique 14 de retour de fuite.

L'assemblage des connecteurs hydrauliques en T 12, et en L 13 du circuit hydraulique 14 de retour fuite se fait suivant les étapes suivantes:
- assembler du connecteur en T 12 par l'insertion coaxiale de l'élément raccord 22 dans la cage tubulaire 20 du côté de l'extrémité ouverte 32 de la cage 20.
- assembler du connecteur en L 13 par l'insertion coaxiale de l'élément raccord 23 dans la cage tubulaire 20 du côté de l'extrémité ouverte 32 de la cage tubulaire 20.
- finir l'assemblage du connecteur en T 12 par l'insertion du capuchon verrou 24 dans l'extrémité ouverte 32 de la cage tubulaire 20 déjà assemblé à l'élément raccord 22 puis encliquetage finale du capuchon 24 dans la cage 20 en le verrouillant. Le capuchon 24 comprend un détrompeur pour le montage dans la cage 20 assemblé à l'élément raccord 22.
- finir l'assemblage du connecteur en L 13 par l'insertion du capuchon verrou 24 dans l'extrémité ouverte 32 de la cage tubulaire 20 déjà assemblé à l'élément raccord 23 puis encliquetage finale du capuchon 24 dans la cage 20 en le verrouillant. Le capuchon 24 comprend un détrompeur pour le montage dans la cage 20 assemblé à l'élément raccord 23.

Le circuit hydraulique 14 de retour de fuite est destiné exclusivement à un équipement d'injection direct de carburant diesel pour moteur à combustion interne. Si le moteur à combustion interne comprend un nombre « N » injecteurs 10 de carburant alors le circuit hydraulique 14 de retour de fuite comprend « N » connecteurs en T 12 et en L 13 et « N-1» éléments tuyaux 16. Les connecteurs en T 12, en L 13 comprennent « N - 1 » connecteurs en T 12 et un connecteur en L 13. La réalisation du circuit 14 de retour de fuite s'étend entre un premier connecteur en L 13 et un connecteur en T 12.

L'assemblage du circuit 14 de retour de fuite se fait selon les étapes suivantes :
- agencer des éléments tuyaux 16 dans les bras 28, 29 de l'élément raccord 22 du connecteur en T 12 afin de réaliser la ligne centrale du circuit 14 de retour de fuite le long de la direction principale X1 avec une pluralité d'éléments tuyaux 16 et une pluralité de connecteurs en T 12, un élément tuyau 16 étant agencé entre deux connecteurs en T 12 voisins.
- assembler le circuit 14 par l'ajout aux extrémités d'un connecteur en T 12 et d'un connecteur en L 13. A une extrémité du circuit hydraulique 14 de retour de fuite le connecteur en T 12 est assemblé avec une rotation de 150° par rapport aux connecteurs en T 12 du circuit hydraulique 14 déjà assemblés le long de la direction principale X1. A l'autre extrémité est ajouté un connecteur en L 13.

### Liste des références :

- 10: injecteur
- 12: connecteur en T
- 13: connecteur en L
- 14: circuit
- 16: élément tuyau
- 17: élément tuyau long
- 20: cage tubulaire
- 22: élément raccord en T
- 23: élément raccord en L
- 24: capuchon
- 25: rainure
- 26: corps
- 27: clip du capuchon
- 28: bras
- 29: bras
- 30: échancrure d'élément raccord
- 31: échancrure de la cage
- 32: extrémité de la cage
- 36: extrémité d'élément raccord
- X1: direction principale
- X2: axe
- Y1: axe
- Y2: axe
- Z: axe
- B: angle
- C: angle

## Revendications

1. Méthode de moulage d'un connecteur hydraulique (12, 13) réalisé en plastique moulé, le connecteur (12, 13) étant exclusivement prévu pour être agencé dans un circuit hydraulique (14) de retour de carburant diesel d'un équipement d'injection direct pour moteur à combustion interne, le connecteur (12,13) pouvant être en forme de T (12) ou en forme de L (13), le connecteur (12, 13) comprenant :
- un élément raccord (22,23) ayant un corps (26) globalement cylindrique d'axe de corps (Z) et, un bras (28) s'étendant selon un axe de bras (Y1) perpendiculaire à l'axe de corps (Z) pour le connecteur en forme de L (13) ou, deux bras (28, 29) s'étendant selon deux axes de bras distincts (Y1, Y2) perpendiculaire à l'axe de corps (Z) pour le connecteur en forme de T (12), le corps (26) étant apte à être connecté à un injecteur de carburant (10) et, chaque bras (28, 29) étant apte à être connecté à l'extrémité d'un élément tuyau (16) et,
- une cage cylindrique tubulaire (20) s'étendant selon l'axe de corps (Z), la cage étant pourvue de deux échancrures (30, 31) latérales, le corps (26) étant agencé dans la cage (20), chaque échancrure (30, 31) permettant de laisser s'étendre un bras (28, 29) et,
- un capuchon verrou (24) complémentairement encliqueté à une extrémité de la cage tubulaire (20) de sorte à emprisonner l'élément raccord (22,23) dans la cage (20),
la méthode de moulage comprenant les étapes suivantes :
a) pourvoir un moule ayant une empreinte d'élément raccord (22) en T, ladite empreinte comprenant une empreinte de corps (26) et deux empreintes de bras (28, 29);
b) agencer un insert dans l'empreinte d'un des deux bras (28, 29) lorsque il est prévu de mouler un élément raccord en L (23).

2. Méthode de moulage d'un connecteur hydraulique (12) selon la revendication 1, dans lequel le moule est un moule multi-empreintes dont toutes les empreintes sont identiques chacune comprenant une empreinte de corps (26) et deux empreintes de bras (28).

3. Méthode de moulage d'un connecteur hydraulique selon l'une des revendications 1 ou 2, dans laquelle les empreintes de bras (28) font un angle (B) entre elles, de sorte que les bras (28) de l'élément raccord (22) fassent ledit angle (B) entre eux, ledit angle (B) s'inscrivant dans un plan perpendiculaire à l'axe du corps (Z).

4. Méthode de moulage d'un connecteur hydraulique (12, 13) selon la revendication 3, dans laquelle ledit angle (B) est ledit angle étant compris entre 120° et 180°, de préférence d'environ 150°.

5. Méthode de réalisation d'un circuit hydraulique (14) de retour exclusivement prévu pour un équipement d'injection direct de carburant diesel pour moteur à combustion interne, le circuit (14) s'étendant entre un premier connecteur (13) en L et un dernier connecteur (12) en T, et comprenant une pluralité de connecteurs intermédiaires (12) en T ainsi qu'une pluralité d'élément de tuyau (16), les bras (28) de tous les connecteurs (12,13) étant globalement alignés selon une direction principale (X1) et, un élément tuyau (16) étant agencé entre deux connecteurs (12,13) voisins, la méthode étant **caractérisée en ce que** tous les connecteurs (12,13) sont réalisés selon l'une des revendications 3 ou 4, et sont agencés de sorte que les axes des bras (Y1, Y2) fassent un angle globalement constant (C) avec la direction principale (X1), ledit angle (C) étant globalement égal à 90° - B/2, et le connecteur en T (12) agencé à l'extrémité du circuit (14) est tourné autour de l'axe de corps (Z) d'un angle globalement égal à l'angle inter-bras (B) par rapport aux autres connecteurs en T (12) du circuit hydraulique.

6. Méthode de réalisation d'un circuit hydraulique (14) de retour de fuites selon la revendication 5, dans lequel les éléments tuyaux (16) ont des longueurs identiques.

## Patentansprüche

1. Verfahren zum Formen eines Hydraulikverbinders (12, 13) aus geformtem Kunststoff, wobei der Verbinder (12, 13) ausschließlich dazu vorgesehen ist, in einem Dieselkraftstoffrücklauf-Hydraulikkreis einer Direkteinspritzanlage für einen Verbrennungsmotor angeordnet zu werden, wobei der Verbinder (12, 13) entweder T-förmig (12) oder L-förmig (13) ist und wobei der Verbinder (12, 13) enthält:
- ein Verbindungselement (22, 23), das einen insgesamt zylindrischen Körper (26) mit einer Körperachse (Z) und im Falle eines L-förmigen Verbinders (13) einen Arm (28), der sich entlang einer Armachse (Y1) erstreckt, die senkrecht zur Körperachse (Z) verläuft, und im Falle eines T-förmigen Verbinders (12) zwei Arme (28, 29) enthält, die sich entlang von zwei unterschiedlichen Armachsen (Y1, Y2) erstrecken, die senkrecht zur Körperachse (Z) verlaufen, wobei der Körper (26) dazu geeignet ist, mit einem Kraftstoffeinspritzventil (10) verbunden zu werden, und jeder Arm (28, 29) dazu geeignet ist, mit dem Ende eines Rohrstücks (16) verbunden zu werden, und
- einen rohrförmigen zylindrischen Käfig (20), der sich entlang der Körperachse (Z) erstreckt, wobei der Käfig mit zwei seitlichen Aussparungen (30, 31) versehen ist, wobei der Körper (26) im Käfig (20) angeordnet ist, wobei jede Aussparung (30, 31) die Erstreckung eines Arms (28, 29) ermöglicht, und
- eine Verriegelungskappe (24), die komplementär an einem Ende des rohrförmigen Käfigs (20) verriegelt ist, so dass sie das Verbindungselement (22, 23) im Käfig (20) einschließt,
wobei das Formverfahren die folgenden Schritte umfasst:
a) Bereitstellen einer Gießform mit einem T-förmigen Verbindungselementhohlraum (22), wobei der Hohlraum einen Körperhohlraum (26) und zwei Armhohlräume (28, 29) aufweist;
b) Anordnen eines Einsatzes in den Hohlraum eines der beiden Arme (28, 29), wenn ein L-förmiges Verbindungselements (23) geformt werden soll.

2. Formverfahren zum Formen eines Hydraulikverbinders (12) nach Anspruch 1,
wobei die Gießform eine Mehrfachform ist, bei der sämtliche Hohlräume identisch sind und jeweils einen Körperhohlraum (26) und zwei Armhohlräume (28) aufweisen.

3. Formverfahren zum Formen eines Hydraulikverbinders nach Anspruch 1 oder 2,
wobei die Armhohlräume (28) einen Winkel (B) miteinander einschließen, so dass die Arme (28) des Verbindungselements (22) den Winkel (B) miteinander einschließen, wobei der Winkel (B) sich in eine Ebene senkrecht zur Körperachse (Z) einschreibt.

4. Formverfahren zum Formen eines Hydraulikverbinders (12, 13) nach Anspruch 3,
wobei der Winkel (B) zwischen 120° und 180°, vorzugsweise etwa 150°, beträgt.

5. Verfahren zum Herstellen eines Rücklauf-Hydraulikkreislaufs (14), der ausschließlich für eine Dieselkraftstoff-Direkteinspritzanlage für einen Verbrennungsmotor vorgesehen ist, wobei der Kreislauf (14) sich zwischen einem L-förmigen ersten Verbinder (13) und einem T-förmigen letzten Verbinder (12) erstreckt und eine Mehrzahl von T-förmigen Zwischenverbindern (12) sowie eine Mehrzahl von Rohrstücken (16) enthält, wobei die Arme (28) sämtlicher Verbinder (12, 13) insgesamt in einer Hauptrichtung (X1) ausgerichtet sind und wobei ein Rohrstück (16) zwischen zwei benachbarten Verbindern (12, 13) angeordnet ist,
wobei das Verfahren **dadurch gekennzeichnet ist, dass**
sämtliche Verbinder (12, 13) nach einem der Ansprüche 3 oder 4 hergestellt und so angeordnet sind, dass die Armachsen (Y1, Y2) einen insgesamt konstanten Winkel (C) mit der Hauptrichtung (X1) einschließen, wobei der Winkel (C) insgesamt gleich 90° - B/2 ist, und
der am Ende des Kreislaufs (14) angeordnete T-förmige Verbinder (12) um die Körperachse (Z) um einen Winkel gedreht ist, der insgesamt gleich dem Zwischenarmwinkel (B) bezüglich der weiteren T-förmigen Verbinder (12) des Hydraulikkreislaufs ist.

6. Verfahren zum Herstellen eines Leckrücklauf-Hydraulikkreislaufes (14) nach Anspruch 5,
wobei die Rohrstücke (16) identische Längen aufweisen.

## Claims

1. A method for molding a hydraulic connector (12, 13) made of molded plastic, the connector (12, 13) being designed exclusively to be arranged in a diesel fuel backleak hydraulic circuit (14) of direct injection equipment for an internal combustion engine, it being possible for the connector (12, 13) to be T-shaped (12) or L-shaped (13), the connector (12, 13) comprising:
- a coupling element (22, 23) having a roughly cylindrical body (26) with body axis (Z), and an arm (28) extending along an arm axis (Y1) perpendicular to the body axis (Z) in the case of the L-shaped connector (13), or two arms (28, 29) extending along two distinct arm axes (Y1, Y2) perpendicular to the body axis (Z) in the case of the T-shaped connector (12), the body (26) being able to be connected to a fuel injector (10), and each arm (28, 29) being able to be connected to the end of a pipe element (16), and
- a tubular cylindrical cage (20) extending along the axis of the body (Z), the cage being provided with two lateral cutouts (30, 31), the body (26) being arranged in the cage (20), each cutout (30, 31) allowing an arm (28, 29) to extend, and
- a locking cap (24) also clipped onto one end of the tubular cage (20) so as to hold the coupling element (22, 23) captive in the cage (20),
the molding method comprising the following steps:
a) providing a mold with an impression of a T-shaped coupling element (22), said impression comprising an impression of the body (26) and two impressions of the arms (28, 29);
b) arranging an insert in the impression of one of the two arms (28, 29) when the intention is to mold an L-shaped coupling element (23).

2. The method for molding a hydraulic connector (12) as claimed in claim 1, in which the mold is a multi-impression mold all the impressions of which are identical, each one comprising a body impression (26) and two arm impressions (28).

3. The method for molding a hydraulic connector as claimed in one of claims 1 and 2, in which the impressions of the arms (28) make an angle (B) between them, such that the arms (28) of the coupling element (22) make said angle (B) between them, said angle (B) being inscribed in a plane perpendicular to the axis of the body (Z).

4. The method for molding a hydraulic connector (12, 13) as claimed in claim 3, in which said angle (B) is said angle being comprised between 120° and 180°, preferably around 150°.

5. A method for producing a hydraulic backleak circuit (14) exclusively intended for direct diesel fuel injection equipment for an internal combustion engine, the circuit (14) extending between an L-shaped first connector (13) and a T-shaped last connector (12) and comprising a plurality of T-shaped intermediate connectors (12) and a plurality of pipe elements (16), the arms (28) of all the connectors (12, 13) being roughly aligned in a main direction (X1) and a pipe element (16) being arranged between two adjacent connectors (12, 13), the method being **characterized in that** all the connectors (12, 13) are produced as claimed in one of claims 3 and 4 and are arranged in such a way that the axes of the arms (Y1, Y2) make a roughly constant angle (C) with the main direction (X1), said angle (C) being roughly equal to 90° - B/2, and the T-shaped connector (12) arranged at the end of the circuit (14) is rotated about the axis of the body (Z) by an angle roughly equal to the inter-arm angle (B) with respect to the other T-shaped connectors (12) of the hydraulic circuit.

6. The method for producing a hydraulic backleak circuit (14) as claimed in claim 5, in which the pipe elements (16) have identical lengths.
